# EUROPEAN PATENT SPECIFICATION

(11) **EP 2 428 371 B1**
(45) Date of publication and mention of the grant of the patent: **04.12.2013**
(21) Application number: 11007196.6
(22) Date of filing: 05.09.2011
(51) Int. Cl.: B60C 11/11, B60C 11/04, B60C 11/03

(54) **Pneumatic tire**
Luftreifen
Pneu

(30) Priority: 09.09.2010 JP 2010202346
(43) Date of publication of application: 14.03.2012
(73) Proprietor: Sumitomo Rubber Industries, Ltd., Hyogo-ken (JP)
(72) Inventor: Otsuji, Hideki, Kobe-shi Hyogo 651-0072 (JP)
(74) Representative: Manitz, Finsterwald & Partner GbR

(56) References cited:
- JP-A- 57 167 802
- JP-A- 61 108 005

## Description

### Background of the invention

The present invention relates to a pneumatic tire, more particularly to a unidirectional tread pattern comprising V-shaped grooves extending across the tread width defining tread blocks capable of improving the uneven wear resistance.

US patent application publication US-2010-300588-A1 discloses a tread pattern which as shown in Fig.5, comprises center blocks (a) and shoulder blocks (b) extending to the tread edges Te. In this tread pattern, between the center blocks (a) and the shoulder blocks (b), an axial zone (d) devoid of tread elements and extending straight continuously in the tire circumferential direction is formed on each side of the tire equator. In the axial zone (d), the rigidity of the tread pattern in the tire circumferential direction becomes zero. As a result, deformation during running becomes locally larger in the vicinity of the axial zone (d) than other portion and uneven wear is liable to occur.

JP 57-167802 discloses a pneumatic tire having the features of the preamble of claim 1.

### Summary of the Invention

It is therefore, an object of the present invention to provide a pneumatic tire in which the uneven wear resistance as well as steering stability can be improved without sacrificing other performance such as drainage.

This object is achieved with a pneumatic tire having the features of claim 1.

The shapes of shoulder blocks and center blocks are specifically defined and the shoulder blocks and center blocks are specifically arranged.

The center blocks overlap the shoulder blocks in the tire axial direction. Accordingly, the above-mentioned axial zone of the prior art tire in which the rigidity of the tread pattern in the tire circumferential direction becomes zero is eliminated. As a result, the uneven wear can be prevented, and further, the steering stability can be improved.

Further, as the circumferential dimension L2b of the shoulder blocks is gradually increased towards the tread edge where the ground pressure during cornering becomes relatively high, the steering stability during cornering can be improved.

Further, the shoulder blocks are circumferentially subdivided by narrow grooves.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflate to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.
The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like.
The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load Capacity" in ETRTO, the maximum value given in the above-mentioned table in TRA or the like.
In case of passenger car tires, however, the standard pressure and standard tire load are uniformly defined by 180 kPa and 88 % of the maximum tire load, respectively.
In case of racing kart tires, the standard pressure and standard tire load are uniformly defined by 100 kpa and 392 N, respectively.

The tread width TW is the axial distance between the tread edges Te measured in, the normally inflated unloaded condition of the tire.

The tread edges Te are the axial outermost edges of the ground contacting patch (camber angle=0) in the normally inflated loaded condition.

### Brief Description of the Drawings

Fig.1A is a developed partial view of the tread portion of a pneumatic tire according to an embodiment of the present invention.
Fig.1B is a modification of the tread portion shown in Fig.1A which is the same as Fig.1A excepting that additional narrow grooves are provided.
Fig.2 shows a right half of the tread portion shown in Fig.1B.
Fig.3 is an enlarged top view of the center block thereof.
Fig.4 is an enlarged top view of the shoulder block thereof.

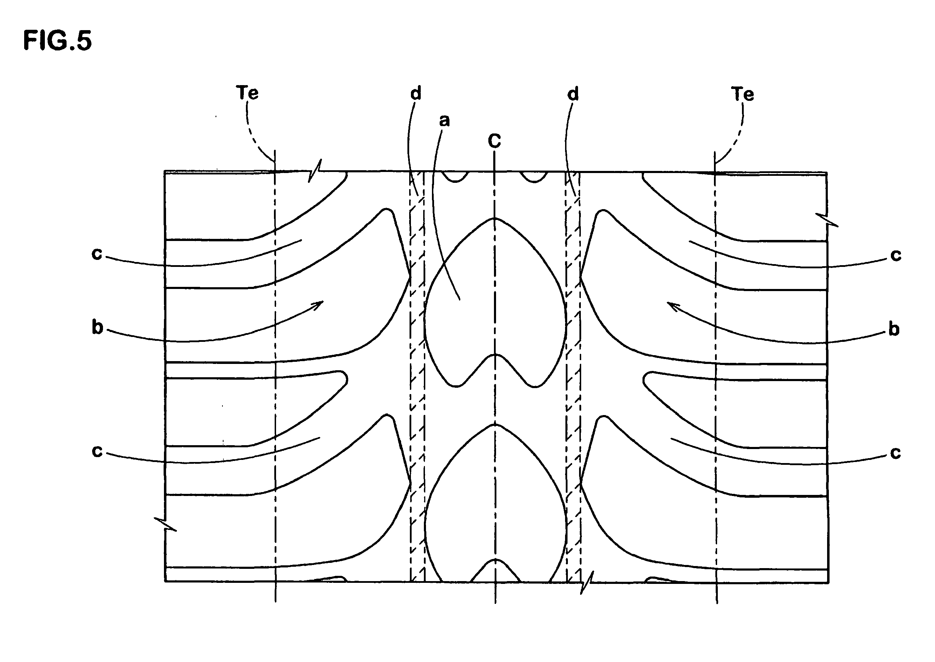

Fig.5 shows the tread pattern according to the prior art.

### Description of the Preferred Embodiments

Embodiments of the present invention will now be described in detail in conjunction with the accompanying drawings.

Though not shown in the drawings, as usual, the pneumatic tire 1 according to the present invention comprises a tread portion 2, a pair of axially spaced bead portions each with a bead core therein, a pair of sidewall portions extending between the tread edges and the bead portions, a carcass extending between the bead portions through the tread portion and sidewall portions, and a tread reinforcing belt disposed radially outside the carcass in the tread portion.

In the embodiments, the tire 1 is designed for a four-wheeled racing kart.

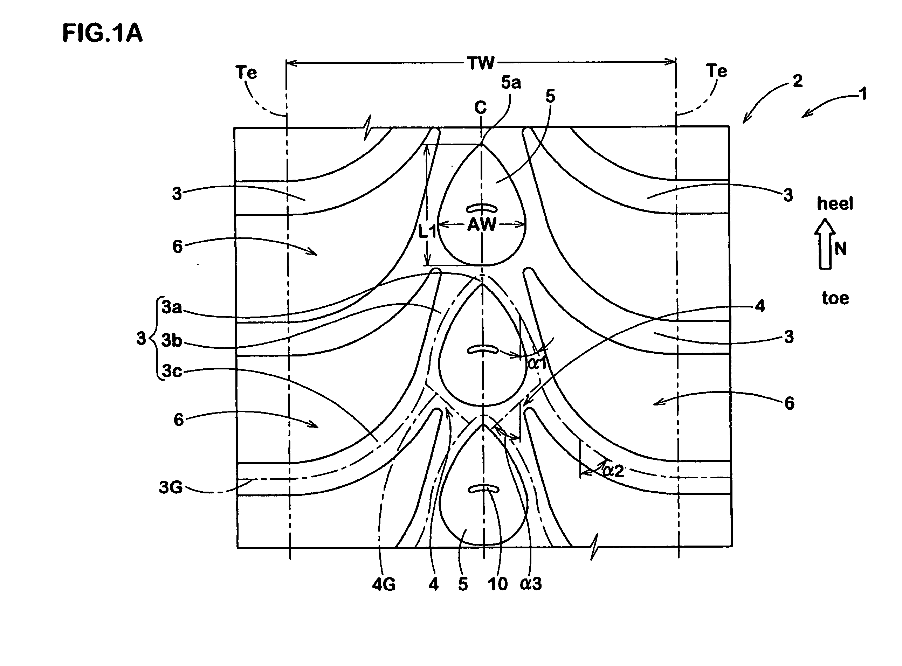

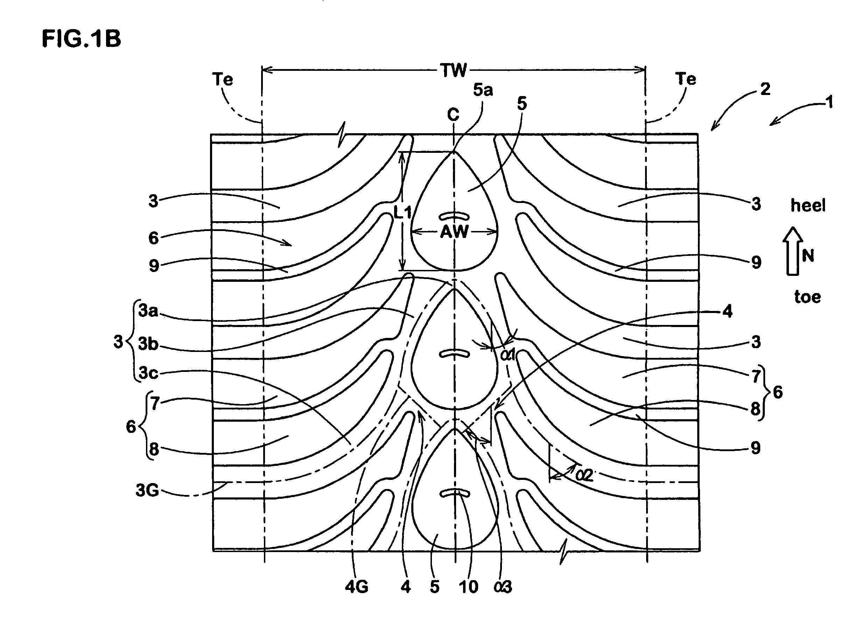

As shown in Fig.1A and Fig.1B, the tread portion 2 is provided with a unidirectional tread pattern defined by tread grooves. The sidewall portion is provided with an indication of the intended tire rotational direction N.

The tread grooves include a plurality of main oblique grooves 3. Each of the main oblique grooves 3 extends from one of the tread edges Te to the other, turning at the tire equator C so as to have a v-shaped configuration.

Further, the tread grooves include a plurality of connecting grooves 4 disposed on each side of the tire equator C. Each of the connecting groove 4 is located near the tire equator C and connects between the circumferentially adjacent main oblique grooves 3.

Furthermore, the tread grooves can include a plurality of narrow grooves 9 as shown in Fig.1B.

By the main oblique grooves 3 and connecting grooves 4, the tread portion 2 is divided into: center blocks 5 arranged on the tire equator C; and shoulder blocks 6 disposed on each side of the tire equator and each extending from one of the connecting grooves 4 to the tread edge Te passing between the circumferentially adjacent main oblique grooves 3.

It is not always necessary, but in the embodiments shown in Figs. 1A abs 1B, the grooves 3 and 4 and the blocks 5 and 6 are symmetrical about the tire equator C with respect to their shapes and positions.

In these embodiments, the main oblique grooves 3 are extended from the tire equator axially outwardly beyond both of the tread edges Te, while inclining to the direction opposite to the intended rotational direction N.
Thereby, the shoulder blocks 6 are also extended axially outwardly beyond the tread edges Te.
By the main oblique grooves 3, water film on the road surface can be led from the tread center to the tread edges and discharged sideway, therefore, good drainage performance can be obtained.

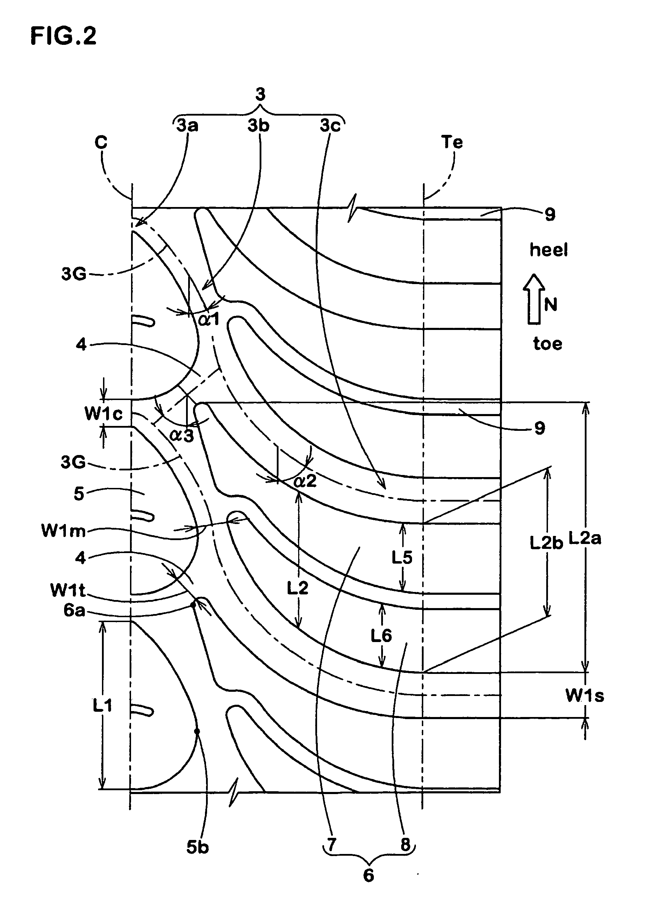

In the embodiments, as shown in Fig.2, the main oblique groove 3 can be considered as being made up of
a very short central section 3a intersecting the tire equator C at substantially 90 degrees passing through between the center blocks 5,
a pair of middle sections 3b each extending axially outwardly from the central section 3a, passing through between the center block 5 and shoulder block 6 and inclining at an angle α1 with respect to the tire circumferential direction, and
a pair of shoulder sections 3c each extending axially inwardly from one of the middle sections 3b, passing through between the shoulder blocks 6 and inclining at an angle α2 with respect to the tire circumferential direction.
Here, the angle α1, α2 means that of the widthwise center line 3G of the main oblique groove 3.

In order that the central section 3a is smoothly connected to the middle sections 3b, the angle α1 of the middle section 3b is set in a range of from 15 to 45 degrees. The lower limit of the angle α1 is preferably not less than 20 degrees. The upper limit of the angle α1 is preferably not more than 40 degrees.
In order to smoothen the drainage from the central section 3a toward the shoulder section 3c, the angle α1 is gradually decreased from the heel-side to the toe-side so that the middle section 3b is slightly curved toward the axially inside. Then, the middle section 3b is connected to the shoulder section 3c.

The angle α2 of the shoulder section 3c is more than the angle α1 of the middle section 3b, and gradually increased toward the axially outside so that the shoulder section 3c is curved toward the tread edge Te to smoothen the drainage from the shoulder section 3c to the outside of the ground contacting patch. Further, such configuration can effectively increase the lateral stiffness (rigidity) of the shoulder block 6 during cornering.

In order to effectively derive such advantageous effects, the angle α2 of the shoulder section 3c is preferably set in a range of not less than 40 degrees, more preferably not less than 45 degrees, but not more than 110 degrees, more preferably not more than 100 degrees. Especially, it is preferable that, at the tread edges Te, the angle α2 is in a range of from 80 to 90 degrees with respect to the tire circumferential direction.

In the embodiments, the connecting grooves 4 are inclined to the direction opposite to the intended rotational direction N from the axially inside toward the axially outside, at inclination angle α3 with respect to the tire circumferential direction. The inclination angle α3 of the widthwise center line 4G of the connecting groove 4 is preferably set in a range of not less than 35 degrees, more preferably not less than 40 degrees, but not more than 55 degrees, more preferably not more than 50 degrees.
If the angle α3 is more than 55 degrees, the drainage has a tendency to deteriorate. If less than 35 degrees, a toe-side part of the center block 5 is decreased in the rigidity and the braking performance, uneven wear resistance and the like are liable to deteriorate.

The groove widths W1 measured perpendicularly to the widthwise center line and the groove depths of the main oblique grooves 3 and connecting grooves 4 can be set arbitrarily according to the usage. In the embodiments, the groove width W1 is set in a range of not less than 4.0 mm, preferably not less than 4.5 mm, but not more than 6.5 mm, preferably not more than 6.0 mm. The groove depth is set in a range of not less than 4.0 mm, preferably not less than 4.5 mm, but not more than 6.0 mm, preferably not more than 5.5 mm.

In order to smoothen the drainage from the tire equator side toward the axial outside, the groove width W1 of the main oblique groove 3 is preferably such that the groove width W1s in the shoulder sections 3c (for example, at the tread edges Te) is largest or larger than the groove width w1m in the middle sections 3b which is larger than the groove width w1c in the central section 3a (for example at the tire equator c) which is the smallest.

In the embodiments, in order to secure the axial rigidity of the shoulder blocks 6, the groove width W1s is substantially constant in the shoulder sections 3c.

Preferably, the groove width of the main oblique groove 3, in particular, the groove width W1m in the middle sections 3b and the groove width W1s in the shoulder sections 3c are set to be larger than the groove width W1t of the connecting grooves 4.

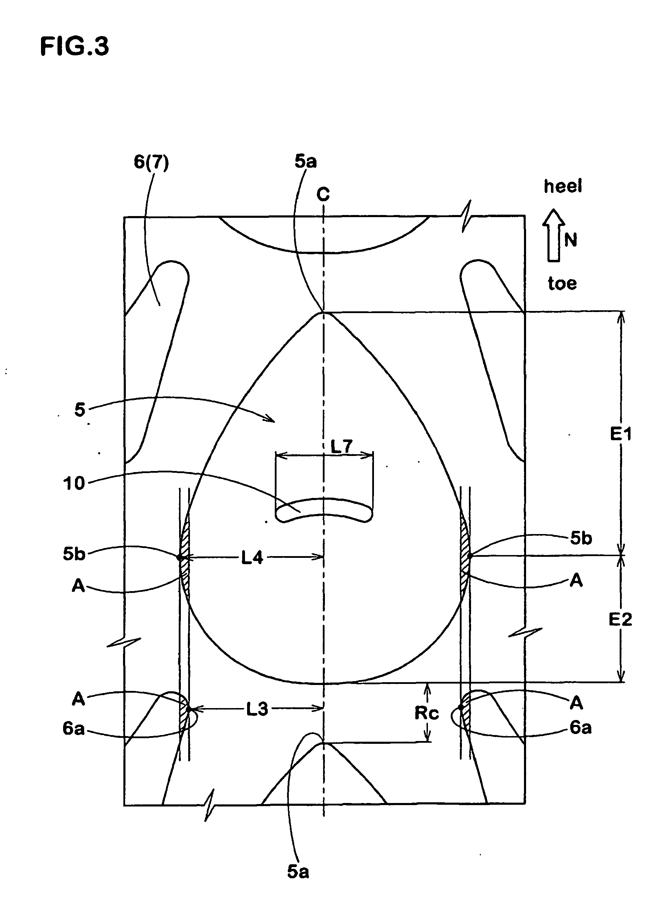

Preferably, the shape of the center block 5 is symmetrical about the tire equator C. In the embodiments, as shown in Fig.3, the center block 5 has a water-drop shape tapering toward the intended tire rotational direction N. Therefore, the flow of the water film is divided by the heel-side ends 5a of the center blocks 5 and led to both sides of the center blocks 5, therefore the draining can be improved.

As shown in Fig.3, the center block 5 can be considered as being made up of
a heel-side part E1 having a substantially triangular shape formed on the heel-side of an axial line drawn between the axially outermost ends 5b of the center block 5, and
a toe-side part E2 having a substantially semicircular shape formed on the toe-side of the above-mentioned axial line.

The axially outermost ends 5b of the center block 5 are positioned on the toe-side of the circumferential center point of the circumferential length L1 of the center block 5. By such center block 5, it becomes possible to reduce the resistance to the drainage flow and increase the pattern rigidity so as to satisfy both of the drainage and steering stability.
In order to effectively derive such advantageous effects, the circumferential length L1 of the center block 5 is preferably set in a range of from 35 to 45 % of the tread width TW, and the maximum axial width AW of the center block 5 is preferably set in a range of from 25 to 38 % of the tread width TW. The ratio AW/L1 of the maximum width AW to the circumferential length L1 is preferably set in a range of from 50 to 90 %.

On the other hand, in order to release the heat generated in the center block 5 during running, the center block 5 is preferably provided in the top surface thereof with a shallow recess 10.
In order to avoid a possible decrease in the rigidity of the center block 5, it is preferable that the recess 10 is disposed in the vicinity of the circumferential central of the circumferential length L1 of the center block 5, and the recess 10 is centered on the tire equator, and both ends of the recess 10 are terminated within the center block 5, and the axial length L7 of the recess 10 is set in a range of from 25 to 40 % of the maximum width AW of the center block 5.
In this example, the recess 10 has an arc shape curved toward the intended rotational direction N.
Preferably, the depth of the recess 10 is set in a range of from about 40 to 80 % of the maximum height of the center block 5.

The above-mentioned shoulder blocks 6 are each tapered toward the axially innermost end 6a thereof so that the circumferential dimension L2 across the shoulder block is gradually increased from the axially inside to the outside. Therefore, the rigidity is increased toward the tread edge to lessen the deformation of the shoulder block 6. As a result, uneven wear can be prevented. Further, the steering stability during cornering can be improved.

As shown in Fig.3, on each side of the tire equator, the axially innermost ends 6a of the shoulder blocks 6 are located axially inside the axially outermost ends 5b of the center blocks 5 so that the shoulder blocks 6 overlap with the center blocks 5 in the tire axial direction.

The axial overlap which can be defined by the difference L4-L3 of the axial distance L4 from the tire equator c to the axially outermost end 5b of the center block 5 from the axial distance L3 from the tire equator C to the axially innermost ends 6a of the shoulder blocks 6, is set in a range of not less than 0.5 mm, preferably not less than 0.7 mm, but not more than 4.0 mm, preferably not more than 3.0 mm.

Accordingly, in the tread pattern, there is not formed an axial zone in which the circumferential rigidity of the tread pattern is zero as in the prior art. Therefore, uneven wear of the blocks 7 and 5 around such zone can be prevented. Further, as the variations of the tread pattern rigidity becomes small, it is possible to improve the steering stability. If the axial overlap is more than 4.0 mm, there is a possibility that the drainage by the connecting grooves 4 is deteriorated.

It is preferable that the axially innermost ends 6a of the shoulder blocks are respectively positioned within the circumferential ranges Rc between the center blocks 5 in order to compensate for the relatively low pattern rigidity in the heel-side end portions (5a) of the center blocks 5. Thereby, uneven wear at the heel-side ends 5 can be prevented.

In order that the tread pattern rigidity in the tire circumferential direction and axial direction are improved in a well balanced manner, the shoulder block 6 extends obliquely so as to increase its maximum circumferential length L2a and maximum axial length.

Preferably, the ratio L2b/L2a of the circumferential dimension L2b across the shoulder block 6 measured at the tread edge Te to the maximum circumferential length L2a of the shoulder block 6 is set in a range of not less than 35 %, more preferably not less than 40 %, but not more than 75 %, more preferably not more than 70 %. If the ratio L2b/L2a is more than 75 %, uneven wear is liable to occur near the axially innermost end 6a of the shoulder block 6.

As shown in Fig.1B, the shoulder block 6 can be provided with a single narrow groove 9 so that the shoulder block 6 is subdivided in the tire circumferential direction into a first part 7 on the heel-side of the narrow groove 9 and a second part 8 on the toe-side of the narrow groove 9.
The difference between the tread patterns shown in Figs.1A and 1B is only the narrow groove 9.

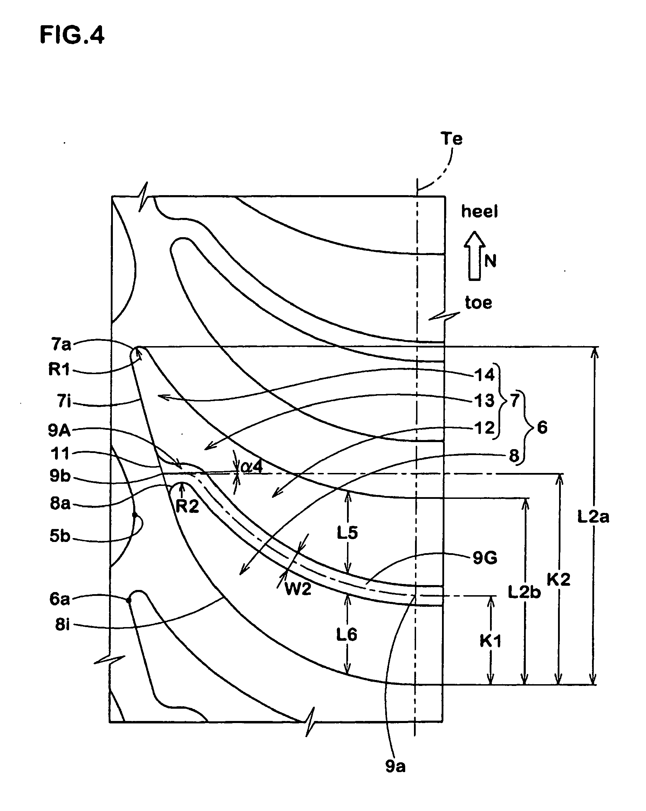

In the narrow groove 9 in this example, its major part constituting an almost entire length of the narrow groove 9 excepting the axially inner end portion is curved along the main oblique grooves 3.
At the tread edge Te, the narrow groove 9 is positioned at the substantially midpoint of the circumferential dimension L2b of the shoulder block 6, namely, as show in Fig.4, the circumferential distance K1 of the widthwise center line 9G of the narrow groove 9 from the (toe-side) edge of the shoulder block 6 is 50+/-5% of the dimension L2b.

In order to prevent the heel-side end portion of the shoulder block 6 from being decreased in the rigidity, the axially inner end 9b of the narrow groove 9 is opened to the main oblique groove 3 at a position spaced apart from the toe-side extreme end of the shoulder block 6 by a circumferential length K2. The circumferential length K2 is preferably set in a range of not less than 55 %, more preferably not less than 60 %, but not more than 75 %, more preferably not more than 70 % of the maximum circumferential length L2a of the shoulder block 6. Here, the length K2 is measured to the widthwise center line 9G of the narrow groove 9.
As a result, the axially inner end portions of the first and second part 7 and 8 are prevented from being excessively narrowed to maintain the rigidity and thereby maintain uneven wear resistance.

Between the circumferentially adjacent main oblique grooves 3, the axially inner end 9b of the narrow groove 9 is positioned on the heel-side of the axially outermost end 5b of the center block 5. Therefore, the water flow in the relatively narrow middle section 3b is split toward the narrow groove 9, and the drainage can be improved.
In this embodiment, as shown in Fig.4, in order to smoothen the water flow into the narrow groove 9, the narrow groove 9 is provided in the axially inner end 9b with a flare part 9A extending at an inclination angle α4 within a range of +/- 10 degrees with respect to the axial direction.

The groove width W2 of the narrow groove 9 is set to be less than the groove width W1 of the main oblique groove 3 to provide drainage without sacrificing the rigidity of the shoulder block 6. Preferably, the groove width W2 is set in a range of from about 1.5 to 4.0 mm.
The groove depth of the narrow groove 9 is preferably set in a range of from 3.0 to 5.0 mm for similar reasons. In this example, the groove width w2 is constant along the almost entire length of the narrow groove 9 excepting the flare part 9A.

As shown in Fig.4, the first part 7 of the shoulder block 6 on the heel-side of the narrow groove 9 can be considered as being made up of
a first gradually narrowing part 12 extending from the tread edge Te toward the tire equator C and toward the heel-side and gradually decreased in the circumferential dimension L5 thereacross,
a gradually widening part 13 extending from the first gradually narrowing part 12 toward the tire equator C and gradually increased in the circumferential dimension L5, and
a second gradually narrowing part 14 extending from the gradually widening part 13 to the axially innermost end 6a and gradually decreased in the circumferential dimension L5.
The gradually widening part 13 increases the ground contacting area and the rigidity on the tire equator side where larger load is applied during straight running, therefore, the occurrence of uneven wear of the first part 7 can be controlled.

On the other hand, the second part 8 of the shoulder block 6 on the toe-side of the narrow groove 9 extends from the tread edge Te toward the tire equator C, while gradually decreasing its circumferential dimension L6 thereacross.

In order to prevent the occurrence of uneven wear, the heel-side ends 7a and 8a of the first and second parts 7 and 8 are preferably rounded by an arc having a radius of curvature R1, R2 of from 1.5 to 3.0 mm.

### Comparison Tests

Based on the tread pattern shown in Fig.1B, pneumatic tires for racing karts (front tires and rear tires) were prepared and tested.

The tires had the same structure excepting the specifications show in Table 1.

common specifications are as follows.
front tire size: 10X4.50-5 (rim size 4.50 inch)
rear tire size: 11X6.50-5 (rim size 6.50 inch)
tread width TW: 80 mm/120 mm

### < main oblique grooves >

groove width W1c in central section: 5 to 6 mm/5 to 6 mm
groove width W1m in middle section: 5 to 6 mm/5 to 6 mm
groove width W1s in shoulder portion: 5 to 6 mm/5 to 6 mm
angle α1 in middle section: 50 to 60/50 to 60 degrees
angle α2 at tread edge: 50 degrees/60 degrees

### < connecting grooves >

groove width W1t: 5 to 6 mm/5 to 6 mm
angle α3: 40 degrees/40 degrees

### < narrow groove >

groove depth: 5 mm/5 mm

### < center blocks >

maximum axial width AW: 25 mm/36 mm
circumferential length L1: 35 mm/36 mm
The values before "/" and values after "/" indicate those of the front tires and rear tires respectively.

### < Drainage (lap time) test >

on a wet 952-meter circuit course, a racing kart (category: FA) provided with test tires (tire pressure: front=rear=100kPa) was run 20 laps at full throttle by a skilled racing driver, and the last 20th lap time was measured. The test results are shown in Table 1.

### < steering stability test >

In the above-mentioned full throttle running under wet condition, the driver evaluated the steering response and cornering grip (lateral grip) into five ranks. The test results are shown in Table 1m wherein the higher the rank number, the better the performance.

### < Uneven wear resistance test >

After the above-mentioned tests, the tread portion was visually checked for uneven wear and evaluated into five ranks. The test results are shown in Table 1, wherein the higher the rank number, the better the uneven wear resistance.

From the test results, it was confirmed that the tires according to the present invention can be improved in the drainage (lap time), steering stability and uneven wear resistance.

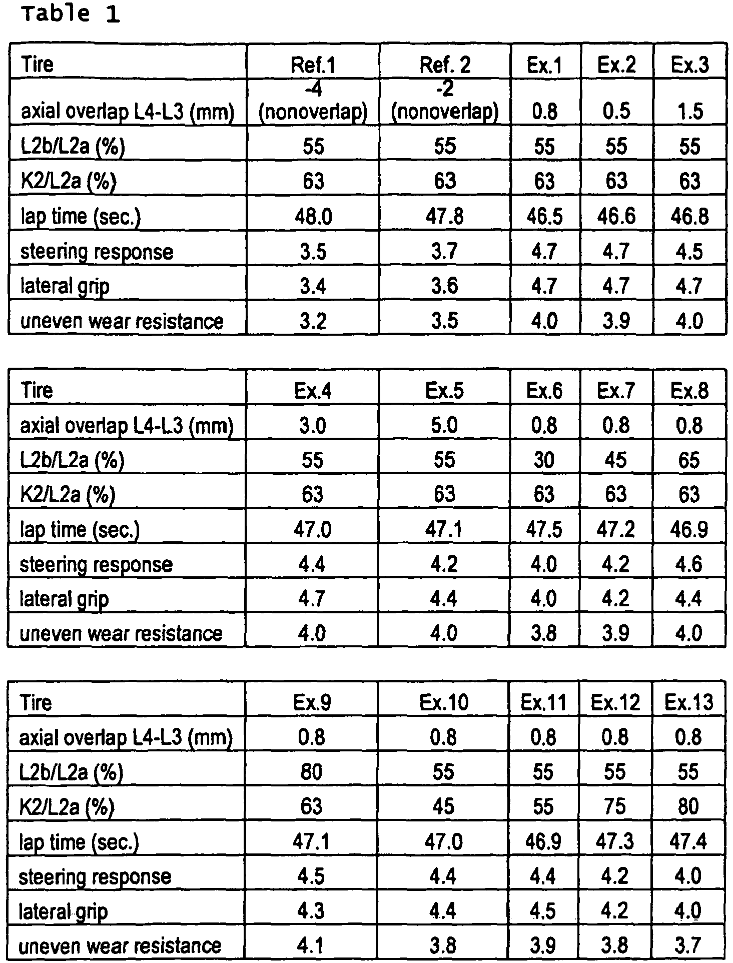

## Claims

1. A pneumatic tire (1) comprising
a tread portion (2) provided with
a plurality of v-shaped main oblique grooves (3) extending from one of tread edges (Te) to the other, and
a plurality of connecting grooves (4) each disposed on one side of the tire equator (C) to connect between the circumferentially adjacent main oblique grooves (3) at a position near the tire equator (C), whereby the tread portion (2) is divided into
a plurality of center blocks (5) arranged on the tire equator (C),
and
a plurality of shoulder blocks (6) disposed on each side of the tire equator (C) and each extending from one of the connecting grooves (4) to the tread edge (Te) passing between the circumferentially adjacent main oblique grooves (3),
wherein
the axially innermost ends of the shoulder blocks (6) are positioned axially inside the axially outermost ends of the center blocks (5), and
the circumferential dimension L2b across each said shoulder block (6) is gradually increased towards the tread edge (Te), **characterized in that**
the shoulder blocks (6) are circumferentially subdivided by narrow grooves (9).

2. The pneumatic tire according to claim 1, wherein
the circumferential dimension L2b at the tread edge (Te) is in a range of from 0.35 to 0.75 times the maximum circumferential length L2a of the shoulder block.

3. The pneumatic tire according to claim 1 or 2, wherein
the narrow grooves (9) are curved and extend along the main oblique grooves (3).

4. The pneumatic tire according to claim 3, wherein
at the tread edges, each of the narrow grooves (9) is positioned substantially at a circumferential center of the circumferential dimension L2b of the shoulder block (6).

5. The pneumatic tire according to claim 3 or 4, which is provided with an indication of the intended tire rotational direction, and
the oblique main grooves (3) are inclined to the direction opposite to the tire rotational direction from the tire equator (C) toward the axially outside, and
the axially inner end of the narrow groove (9) is opened to the main oblique groove (3) at a position spaced apart from a toe-side end of the shoulder block (6) by a circumferential distance K2 of from 55 to 75 % of the maximum circumferential length L2a of the shoulder block (6).

6. The pneumatic tire according to any one of claims 1-4, wherein
the axially innermost end of the shoulder block (6) is positioned within a circumferential range between the circumferential extreme ends of the adjacent center blocks (5).

7. The pneumatic tire according to any one of claims 1-5, which is provided with an indication of the intended tire rotational direction, and
the center block (5) has a water-drop shape tapering toward the intended tire rotational direction.

## Patentansprüche

1. Luftreifen (1), umfassend
einen Laufflächenabschnitt (2), der versehen ist mit
einer Mehrzahl von v-förmigen schrägen Hauptrillen (3), die sich von einer von Laufflächenkanten (Te) zu der anderen erstrecken, und
einer Mehrzahl von Verbindungsrillen (4), die jeweils auf einer Seite des Reifenäquators (C) angeordnet sind, um eine Verbindung zwischen den in Umfangsrichtung benachbarten schrägen Hauptrillen (3) an einer Stelle nahe des Reifenäquators (C) herzustellen, wodurch der Laufflächenabschnitt (2) unterteilt ist in
eine Mehrzahl von Mittelblöcken (5), die auf dem Reifenäquator (C) angeordnet sind,
und
eine Mehrzahl von Schulterblöcken (6), die auf jeder Seite des Reifenäquators (C) angeordnet sind und sich jeweils von einer der Verbindungsrillen (4) zu der Laufflächenkante (Te) erstrecken, wobei sie zwischen den in Umfangsrichtung benachbarten schrägen Hauptrillen (3) verlaufen, wobei
die axial innersten Enden der Schulterblöcke (6) axial innerhalb der axial äußersten Enden der Mittelblöcke (5) angeordnet sind, und
die Umfangsabmessung L2b über jeden Schulterblock (6) hinweg allmählich zu der Laufflächenkante (Te) hin zunimmt,
**dadurch gekennzeichnet, dass**
die Schulterblöcke (6) in Umfangsrichtung durch schmale Rillen (9) unterteilt sind.

2. Luftreifen nach Anspruch 1, wobei
die Umfangsabmessung L2b an der Laufflächenkante (Te) in einem Bereich des 0,35- bis 0,75-fachen der maximalen Umfangslänge L2a des Schulterblocks liegt.

3. Luftreifen nach Anspruch 1 oder 2,
wobei die schmalen Rillen (9) gekrümmt sind und sich entlang der schrägen Hauptrillen (3) erstrecken.

4. Luftreifen nach Anspruch 3, wobei
an den Laufflächenkanten jede der schmalen Rillen (9) im Wesentlichen in einer Umfangsmitte der Umfangsabmessung L2b des Schulterblocks (6) angeordnet ist.

5. Luftreifen nach Anspruch 3 oder 4,
der mit einem Hinweis auf die vorgesehene Reifendrehrichtung versehen ist, und
die schrägen Hauptrillen (3) in die Richtung entgegengesetzt zu der Reifendrehrichtung von dem Reifenäquator (C) zu der axialen Außenseite hin geneigt sind, und
das axial innere Ende der schmalen Rille (9) zu der schrägen Hauptrille (3) an einer Stelle geöffnet ist, die von einem zehenseitigen Ende des Schulterblocks (6) mit einem Umfangsabstand K2 von 55 bis 75 % der maximalen Umfangslänge L2a des Schulterblocks (6) beabstandet ist.

6. Luftreifen nach einem der Ansprüche 1 bis 4, wobei
das axial innerste Ende des Schulterblocks (6) innerhalb eines Umfangsbereichs zwischen den äußersten Umfangsenden der benachbarten Mittelblöcke (5) angeordnet ist.

7. Luftreifen nach einem der Ansprüche 1 bis 5,
der mit einem Hinweis auf die vorgesehene Reifendrehrichtung versehen ist, und
der Mittelblock (5) eine Wassertropfenform aufweist, die sich zu der vorgesehenen Reifendrehrichtung hin verjüngt.

## Revendications

1. Bandage pneumatique (1) comprenant
une portion formant bande de roulement (2) dotée
d'une pluralité de rainures obliques principales (3) en forme de v s'étendant depuis l'une des bordures de roulement (Te) vers l'autre, et
une pluralité de rainures de connexion (4) disposées chacune sur un côté de l'équateur de pneumatique (C) pour assurer une connexion entre les rainures obliques principales (3) circonférentiellement adjacentes à une position proche de l'équateur de pneumatique (C), en raison de quoi la portion formant bande de roulement (2) est divisée
en une pluralité de blocs centraux (5) agencés sur l'équateur de pneumatique (C), et
en une pluralité de blocs d'épaulement (6) disposés de chaque côté de l'équateur de pneumatique (C) et s'étendant chacun depuis l'une des rainures de connexion (4) vers la bordure de roulement (Te) passant entre les rainures obliques principales (3) circonférentiellement adjacentes,
dans lequel
les extrémités axialement les plus intérieures des blocs d'épaulement (6) sont positionnées axialement à l'intérieur des extrémités axialement les plus extérieures des blocs centraux (5), et
la dimension circonférentielle L2b à travers chacun desdits blocs d'épaulement (6) augmente graduellement en direction du bord de roulement (Te),
**caractérisé en ce que**
les blocs d'épaulement (6) sont circonférentiellement subdivisés par des rainures étroites (9).

2. Bandage pneumatique selon la revendication 1, dans lequel
la dimension circonférentielle L2b à la bordure de roulement (Te) est dans une plage de 0,35 à 0,75 fois la longueur circonférentielle maximum L2a du bloc d'épaulement.

3. Bandage pneumatique selon la revendication 1 ou 2, dans lequel
les rainures étroites (9) sont incurvées et s'étendent le long des rainures obliques principales (3).

4. Bandage pneumatique selon la revendication 3, dans lequel
au niveau des bordures de roulement, chacune des rainures étroites (9) est positionnée sensiblement au niveau d'un centre circonférentiel de la dimension circonférentielle L2b du bloc d'épaulement (6)

5. Bandage pneumatique selon la revendication 3 ou 4, qui est doté d'une indication de la direction de rotation prescrite du pneumatique, et
les rainures principales obliques (3) sont inclinées vers la direction opposée à la direction de rotation du pneumatique depuis l'équateur de pneumatique (C) en direction axialement extérieure, et
l'extrémité axialement intérieure de la rainure étroite (9) est ouverte vers la rainure oblique principale (3) à une position espacée d'une extrémité du côté du pied du bloc d'épaulement (6) d'une distance circonférentielle K2 de 55 à 75 % de la longueur circonférentielle maximum L2a du bloc d'épaulement (6).

6. Bandage pneumatique selon l'une quelconque des revendications 1 à 4, dans lequel
l'extrémité axialement la plus intérieure du bloc d'épaulement (6) est positionnée dans une plage circonférentielle entre les extrémités circonférentielles extrêmes des blocs centraux adjacents (5).

7. Bandage pneumatique selon l'une quelconque des revendications 1 à 5, qui est doté d'une indication de la direction de rotation prescrite du pneumatique, et
le bloc central (5) présente une forme en goutte d'eau qui va en s'effilant vers la direction de rotation prescrite du pneumatique.
